# EUROPEAN PATENT APPLICATION

(11) **EP 4 538 421 A1**
(43) Date of publication of application: **16.04.2025**
(21) Application number: 23846045.5
(22) Date of filing: 14.06.2023
(51) Int. Cl.: C23C 28/00, B32B 15/18, B32B 27/30, C23C 2/06, C23C 26/00

(54) **GALVANIZED STEEL SHEET AND MANUFACTURING METHOD THEREFOR**

(30) Priority: 26.07.2022 JP 2022118426
(71) Applicant: JFE Steel Corporation, Tokyo 100-0011 (JP)
(72) Inventor: FURUYA, Shinichi, Tokyo 100-0011 (JP); MATSUDA, Takeshi, Tokyo 100-0011 (JP); KUSAKA, Shota, Tokyo 100-0011 (JP)
(74) Representative: Hoffmann Eitle
(86) International application number: PCT/JP2023/021996
(87) International publication number: WO 2024/024310

(57) **Abstract**

An object is to provide a lubricant-coated galvanized steel sheet that, when subjected to complicated and difficult press forming, exhibits low sliding resistance when there is a risk of cracking during press forming and exhibits excellent press formability when a high contact pressure is applied and thus die galling is expected to occur.

On a surface of a galvanized steel sheet, a film is formed that includes an acrylic resin having a glass transition point (Tg) of 100°C or above and an acid value ratio R = acid value (mg-KOH/g)/Tg (°C) of 1.50 or more, and 5 mass% or more of a polyolefin wax having a melting point of 100°C or above and 145°C or below and an average particle size of 3.0 µm or less, the coating weight of the film per side being in the range of 0.2 g/m² or more and 2.5 g/m² or less.

## Description

### Technical Field

The present invention relates to a galvanized steel sheet that excels in slidability at press forming and to a method for producing such a steel sheet. In particular, the present invention relates to a galvanized steel sheet with a lubricating film that exhibits excellent formability even under severe drawing conditions, and to a method for producing such a steel sheet.

### Background

Galvanized steel sheets are widely used in a broad range of fields mainly based on automobile bodies. In such applications, galvanized steel sheets are generally used after being press formed. However, galvanized steel sheets are disadvantageously poor in press formability compared to cold rolled steel sheets because galvanized steel sheets exhibit higher sliding resistance with respect to a press die than cold rolled steel sheets. Specifically, in drawing forming, a galvanized steel sheet having high sliding resistance with respect to a bead resists flowing toward the press die and tends to rupture. In stretch forming, the high sliding resistance with respect to a die gives rise to localized strain and the steel sheet tends to rupture.

An approach widely used to enhance the press formability of galvanized steel sheets is to apply a high-viscosity lubricating oil. However, the high viscosity of the lubricating oil makes degreasing insufficient and thus sometimes leads to paint defects in the painting step. Furthermore, for example, the press performance is destabilized due to the oil being exhausted during pressing. Surface treatment on a die is another method widely used to enhance the press formability. Unfortunately, this method has drawbacks in that the die cannot be adjusted after the surface treatment and that the costs are high. Thus, improvements in press formability of galvanized steel sheets themselves is demanded without relying on high-viscosity lubricating oils or surface treatment on the dies.

Various lubricating surface treatments on steel sheets have been studied to solve the above problems.

Patent Literature 1 describes a technique in which a lubricating film that is an acrylic resin film containing a synthetic resin powder is formed on a galvanized steel sheet.

Patent Literature 2 describes a metal sheet that is coated with a lubricating film in which a solid lubricant protrudes 0.01 to 1.5 µm from the surface of a resin film.

Patent Literature 3 describes a surface-lubricated metal article with excellent press formability that is coated with a 0.5 to 5 µm film containing a polyurethane resin and a lubricant.

Patent Literature 4 describes a technique in which an alkali-soluble organic film containing an epoxy resin and a lubricant is formed on a steel sheet.

### Citation List

### Patent Literature

PTL 1: Japanese Unexamined Patent Application Publication No. 9-170059
PTL 2: Japanese Unexamined Patent Application Publication No. 10-52881
PTL 3: Japanese Unexamined Patent Application Publication No. 2000-309747
PTL 4: Japanese Unexamined Patent Application Publication No. 2000-167981

### Summary of Invention

### Technical Problem

Although the techniques disclosed in Patent Literatures 1 to 4 offer lubricity by the lubricating effect of, for example, the lubricant that is contained, the press formability is not necessarily sufficient when the forming is complicated.

The present invention has been made in view of the circumstances discussed above. It is therefore an object of the present invention to provide a galvanized steel sheet that exhibits low sliding resistance during press forming and thus attains excellent press formability in difficult press forming processes. Another object of the present invention is to provide a method for producing such a galvanized steel sheet.

Furthermore, galvanized steel sheets used for automobile bodies are required to excel in adhesion property and weldability in an assembling process and are also required to have sufficient film removability in an alkaline degreasing step during a painting process.

Here, the galvanized steel sheet is a steel sheet on which a zinc-based coating film is formed. For example, the zinc-based coating film may be a zinc plating that consists of zinc and incidental impurities without any components intentionally added other than zinc, or may be a zinc plating that is based on zinc and contains alloying elements, such as iron, nickel, aluminum, and magnesium, and compounds, such as alumina and silica. The weight of the zinc-based coating in the galvanized steel sheet is not particularly limited but is suitably 3 to 120 g/m² per side. Solution to Problem

The present inventors carried out extensive studies directed to solving the problems described above. As a result, the present inventors have found that the problems can be solved by forming, on a surface of a galvanized steel sheet, an organic resin film that contains an acrylic resin with a glass transition point (Tg) of 100°C or above and an acid value ratio R = acid value (mg-KOH/g)/Tg (°C) of 1.50 or more and also contains 5 mass% or more of a polyolefin wax with a melting point of 100°C or above and 145°C or below and an average particle size of 3.0 µm or less, while controlling the coating weight W of the organic resin film per side to 0.2 g/m² or more and 2.5 g/m² or less.

The present invention has been completed based on the above finding. A gist of the present invention is as follows.
[1] A galvanized steel sheet including, on at least one side, a film including an acrylic resin and a wax, wherein the acrylic resin has a glass transition point (Tg) of 100°C or above and an acid value to glass transition point ratio R = acid value (mg-KOH/g)/Tg (°C) of 1.50 or more, the wax is a polyolefin wax having a melting point of 100°C or above and 145°C or below and an average particle size of 3.0 µm or less, the fraction of the wax in the film is 5 mass% or more, and the coating weight W of the film per side is 0.2 g/m² or more and 2.5 g/m² or less.
[2] The galvanized steel sheet according to [1], wherein the acid value of the acrylic resin is 180 mg-KOH/g or more and 350 mg-KOH/g or less.
[3] The galvanized steel sheet according to [1] or [2], wherein the acid value to glass transition point ratio R of the acrylic resin is 2.05 or less.
[4] The galvanized steel sheet according to any one of [1] to [3], wherein the film contains 30 mass% or more of the acrylic resin and the fraction of the wax is 50 mass% or less.
[5] The galvanized steel sheet according to any one of [1] to [4], wherein the acrylic resin has a mass average molecular weight of 5000 or more and 30000 or less.
[6] The galvanized steel sheet according to any one of [1] to [5], wherein the acrylic resin is a styrene acrylic resin.
[7] The galvanized steel sheet according to any one of [1] to [6], wherein the galvanized steel sheet before formation of the film has an arithmetic average roughness Ra on a surface of the steel sheet of 0.4 µm or more and 2.5 µm or less.
[8] The galvanized steel sheet according to any one of [1] to [7], wherein the film contains 1 mass% or more and 30 mass% or less of an anti-rust agent.
[9] The galvanized steel sheet according to [8], wherein the anti-rust agent is at least one selected from the group consisting of aluminum salts and zinc salts of phosphoric acids, and zinc oxide.
[10] The galvanized steel sheet according to any one of [1] to [9], wherein the average particle size of the wax is 0.01 µm or more and 0.5 µm or less.
[11] The galvanized steel sheet according to any one of [1] to [10], wherein the film contains 1 mass% or more and 10 mass% or less of silica.
[12] A galvanized steel sheet production method for producing the galvanized steel sheet described in any one of [1] to [11], the method including applying a paint including the acrylic resin and the wax described in any one of [1] to [11] to at least one side of a galvanized steel sheet, and drying the paint.
[13] The galvanized steel sheet production method according to [12], wherein the maximum temperature of the galvanized steel sheet reached during the drying is 60°C or above and is equal to or below the melting point of the wax.
[14] The galvanized steel sheet production method according to [12] or [13], wherein the fraction of all solids in the paint is 1 mass% or more and 30 mass% or less.

### Advantageous Effects of Invention

The galvanized steel sheet obtained according to the present invention has a markedly low coefficient of friction with respect to a die or the like and thus attains excellent press formability. Thus, the galvanized steel sheet stably exhibits excellent press formability in complicated forming processes. Furthermore, the galvanized steel sheet also excels in weldability.
Furthermore, a favorable design of the film imparts good adhesion property and film removability to the galvanized steel sheet. Thus, the galvanized steel sheets can be bonded with an adhesive in the same way as the conventional galvanized steel sheets, and the excellent film removability by alkali degreasing eliminates the risk that the painting process will be inhibited.

### Brief Description of Drawings

[Fig. 1] Fig. 1 is a schematic front view illustrating a friction coefficient measuring device.
[Fig. 2] Fig. 2 is a schematic perspective view illustrating the shape and the dimensions of the bead in Fig. 1.

### Description of Embodiments

Embodiments of the present invention will be described below.

A galvanized steel sheet of the present invention includes, on at least one side, a film including an acrylic resin and a wax. In the galvanized steel sheet, the acrylic resin has a glass transition point (Tg) of 100°C or above and an acid value to glass transition point ratio R = acid value (mg-KOH/g)/Tg (°C) of 1.50 or more, the wax is a polyolefin wax having a melting point of 100°C or above and 145°C or below and an average particle size of 3.0 µm or less, the fraction of the wax in the film is 5 mass% or more, and the coating weight W of the film per side is 0.2 g/m² or more and 2.5 g/m² or less.

Hereinafter, the acid value to glass transition point ratio R = acid value (mg-KOH/g)/Tg (°C) will be written as R = acid value/Tg.

The glass transition point of the acrylic resin in the film of the present invention is limited to 100°C or above in order to obtain good lubricity. If the glass transition point is below 100°C, the resin is softened during sliding to lower the holding power for the wax and also to be less able to prevent direct contact of the galvanized steel sheet with a die, failing to offer good slidability. The glass transition point is preferably 110°C or above and 150°C or below. If the glass transition point is higher than 150°C, on the other hand, the resin is hard and tends to be brittle during sliding, failing to offer excellent lubricity in some cases.

Here, the glass transition point is a middle glass transition temperature measured based on JIS K 7121 "Testing Methods for Transition Temperatures of Plastics".

The acid value to glass transition point ratio R = acid value/Tg of the acrylic resin is limited to 1.50 or more. Even when the glass transition point is 100°C or above, excellent lubricity cannot be obtained if the acid value is low (R < 1.50). The reason for this is not clear but is probably because the carboxyl groups in the acrylic resin have high affinity for a die and effectively allow the polyolefin wax in the film to transfer to the die during sliding. As a result of the transfer of the acrylic resin component including the polyolefin wax to the die during sliding, the polyolefin wax protects the die surface and keeps the die surface away from direct contact with the galvanized steel sheet more effectively, thus offering enhanced slidability. When the acid value is low (R < 1.50), the slidability is lowered due to the lack of the carboxyl groups. When the glass transition point of the acrylic resin is high, the resin is more resistant to softening upon sliding and is less transferred to the die. Thus, an increase in glass transition point needs to be accompanied by an increase in acid value in order to obtain excellent slidability. That is, the acid value to glass transition point ratio R = acid value/Tg needs to be controlled to 1.50 or more. R is preferably 1.80 or more. The upper limit of R is not particularly limited but is preferably 2.05 or less. The reason for this is because if R exceeds 2.05, anti-rust properties may be deteriorated.

The acid value of the acrylic resin is preferably 180 mg-KOH/g or more and 350 mg-KOH/g or less. If the acid value is less than 180 mg-KOH/g, the film may be poor in removability with an alkali and may fail to achieve sufficient adhesive strength with an adhesive. If the acid value is more than 350 mg-KOH/g, anti-rust properties may be deteriorated.

Here, the acid value is the number of milligrams of potassium hydroxide required to neutralize the carboxyl groups contained in 1 g of the resin, and is measured based on JIS K 0070 "Test methods for acid value, saponification value, ester value, iodine value, hydroxyl value and unsaponifiable matter of chemical products". In the present invention, the acid value is indicated with the unit mg-KOH/g.

The wax used in the present invention is a polyolefin wax having a melting point of 100°C or above and 145°C or below and an average particle size of 3.0 µm or less.

The reason why the polyolefin wax is used as the wax is because it is low in surface energy and has self-lubricating properties to offer good lubricity. Furthermore, the melting point of the polyolefin may be controlled to 100°C or above and 145°C or below relatively easily by controlling the density or the molecular weight.

By virtue of the melting point of the polyolefin wax being 100°C or above and 145°C or below, the polyolefin wax not only exhibits self-lubricating properties of the wax itself but also is semi-melted by sliding during press forming and is mixed together with the acrylic resin to form a lubricating film component, which coats the die surface and keeps the galvanized steel sheet away from direct contact with the die to realize excellent lubricating effects. If the melting point of the polyolefin wax is below 100°C, the polyolefin wax is completely melted by the frictional heat produced by sliding during press forming, and fails to offer its lubricating effects sufficiently and also fails to coat the die effectively. If the melting point of the polyolefin wax is above 145°C, the polyolefin wax is not melted during sliding, and fails to offer sufficient lubricating effects and also fails to coat the die effectively. The melting point of the polyolefin wax is preferably 120°C or above and 140°C or below.

Here, the melting point of the polyolefin wax is the melting temperature measured based on JIS K 7121 "Testing Methods for Transition Temperatures of Plastics".

If the average particle size of the polyolefin wax exceeds 3.0 µm, the polyolefin wax is less miscible with the acrylic resin during sliding, and fails to coat the die effectively and does not offer sufficient lubricity. The average particle size of the polyolefin wax is preferably 0.5 µm or less, and more preferably 0.3 µm or less.

The average particle size of the polyolefin wax is preferably 0.01 µm or more. If the average particle size of the polyolefin wax is less than 0.01 µm, the polyolefin wax is easily dissolved into a lubricating oil during sliding and sometimes fails to produce sufficient effects in lubricity enhancement. Furthermore, such a polyolefin wax is easily aggregated in a paint for forming the film and thus destabilizes the paint. The average particle size of the polyolefin wax is more preferably 0.03 µm or more. In consideration of the miscibility with the acrylic resin, the average particle size of the polyolefin wax is preferably 0.01 µm or more and 0.5 µm or less.

The average particle size is the volume-average median diameter and is determined by a laser diffraction/scattering method. For example, the average particle size may be determined by analyzing a sample diluted with pure water using laser diffraction/scattering particle size distribution analyzer Partica (registered trademark) LA-960V2 (manufactured by HORIBA, Ltd.).

Among the polyolefin waxes, polyethylene wax is preferably used because the lubricating effects are best obtained by the use of polyethylene wax.

The mass fraction of the polyolefin wax in the film is limited to 5 mass% or more. If the mass fraction of the polyolefin wax in the film is less than 5 mass%, sufficient lubricating effects cannot be obtained. Particularly good lubricating effects can be obtained when the mass fraction of the polyolefin wax in the film is 10 mass% or more. The mass fraction of the polyolefin wax in the film is preferably 50 mass% or less. If the mass fraction of the polyolefin wax in the film is more than 50 mass%, the polyolefin wax is detached easily due to the lack of the base resin component, and the film exhibits poor adhesion to the steel sheet and may be incapable of staying stably to invite poor adhesion property. Furthermore, such a steel sheet, when used for automobile bodies, may not be degreased sufficiently in an alkaline degreasing step during a painting process. The film residues that remain after insufficient film removal in the alkaline degreasing step may deteriorate paintability. The mass fraction of the polyolefin wax in the film is more preferably 30 mass% or less.

Here, the mass fraction of the polyolefin wax in the film is the ratio of the mass of the solids in the polyolefin wax to the mass of all the solids in the paint.

The film of the present invention preferably includes 30 mass% or more of the acrylic resin. When the mass fraction of the acrylic resin in the film is 30 mass% or more, the film offers sufficient enhancements in lubricity by effectively transferring to the die upon sliding and also exhibits sufficient characteristics, such as film removability and adhesion property, that are affected by properties of the acrylic resin component. If the mass fraction of the acrylic resin in the film is less than 30 mass%, the influence of other components is dominant and the desired performance may not be obtained.

The mass average molecular weight of the acrylic resin is preferably 5000 or more and 30000 or less. If the mass average molecular weight of the acrylic resin is less than 5000, anti-rust properties may be poor. If the mass average molecular weight is more than 30000, adhesion property may be deteriorated.

Here, the mass average molecular weight is the mass average molecular weight measured based on JIS K 7252 "Plastics - Determination of average molecular mass and molecular mass distribution of polymers using size-exclusion chromatography".

Furthermore, the acrylic resin is preferably a styrene acrylic resin. The resin containing a styrene monomer attains enhanced water resistance and offers good anti-rust properties. Furthermore, such a resin effectively offers good slidability compared to styrene-free resins.

The film of the present invention preferably contains 1 mass% or more and 30 mass% or less of an anti-rust agent in the film. While rust or discoloration will not occur under normal storage conditions even in the absence of an anti-rust agent, storage under unfavorable conditions may cause rusting if the content of the anti-rust agent is less than 1 mass%. When, in particular, the steel strip is wound into a coil and stored in a humid environment, moisture absorption may give rise to discoloration. If the ratio of the anti-rust agent is more than 30 mass%, the adhesion property may be deteriorated, and the anti-rust agent may be precipitated in the paint to deteriorate the paint stability. The anti-rust agent that is used is preferably at least one selected from the group consisting of aluminum salts and zinc salts of phosphoric acids, and zinc oxide. Here, the phosphoric acids include orthophosphoric acid and condensed phosphoric acids, such as pyrophosphoric acid, tripolyphosphoric acid, tetrapolyphosphoric acid, and metaphosphoric acid. These anti-rust agents provide sufficient anti-rust effects and cause little deterioration in paint stability.

Furthermore, the film of the present invention preferably contains 1 mass% or more and 10 mass% or less of silica in the film. The incorporation of silica increases the water repellency of the film and enhances anti-rust properties. Furthermore, the addition of silica can suppress the precipitation of the anti-rust agent and thus enhances the paint stability. If the content is less than 1 mass%, it is difficult to obtain the effects described above. If the content is more than 10 mass%, the adhesion property may be deteriorated. When silica is added to the film of the present invention, it is preferable to use colloidal silica with a particle size of 5 nm or more and 200 nm or less.

In addition to the acrylic resin, the wax, the anti-rust agent, and the silica, the film in the present invention may contain components generally added to paints, such as surface conditioners, antifoaming agents, and dispersants.

Regarding the surface roughness of the galvanized steel sheet used in the present invention, the arithmetic average roughness Ra before the formation of the film is preferably 0.4 µm or more and 2.5 µm or less. When Ra is 2.5 µm or less, lubricating effects of the film can be stably obtained. If Ra is less than 0.4 µm, minute scratches that can occur during press forming may become more noticeable, and galling may occur during press forming. If Ra exceeds 2.5 µm, the irregularities on the steel sheet are so large that the film present in the recesses will not act effectively during sliding and the lubricating effects of the film are sometimes lowered. The arithmetic average roughness Ra (µm) of the steel sheet may be measured in accordance with JIS B 0633: 2001 (ISO 4288: 1996). When, for example, Ra will be greater than 0.1 and 2 or less, the arithmetic average roughness is determined from a roughness curve measured while setting the cutoff value and the reference length to 0.8 mm, and the evaluation length to 4 mm. When Ra will be more than 2 and 10 or less, the arithmetic average roughness is determined from a roughness curve measured while setting the cutoff value and the reference length to 2.5 mm, and the evaluation length to 12.5 mm.
The film is formed so that the coating weight of the film per side of the galvanized steel sheet will be 0.2 g/m² or more and 2.5 g/m² or less in terms of dry mass. If the coating weight is less than 0.2 g/m², sufficient slidability may not be obtained. If the coating weight is more than 2.5 g/m², weldability and film removability with an alkali, and adhesion property may be deteriorated.

Next, a galvanized steel sheet production method of the present invention will be described.

The galvanized steel sheet production method of the present invention is a method for producing a galvanized steel sheet having, on at least one side, a film including an acrylic resin and a wax. The film is an acrylic resin film in which the acrylic resin has a glass transition point (Tg) of 100°C or above and an acid value to glass transition point ratio R = acid value/Tg of 1.50 or more, and the wax represents a fraction of 5 mass% or more and is a polyolefin wax having a melting point of 100°C or above and 145°C or below and an average particle size of 3.0 µm or less.
First, the galvanized steel sheet production method of the present invention will be described. A steel sheet, such as a cold rolled steel sheet or a hot rolled steel sheet, is galvanized. The galvanization method is not particularly limited. For example, the steel sheet may be galvanized by such a production process as a hot-dip plating process, an electroplating process, a deposition plating process, or a thermal spraying process. The galvanizing treatment may be followed by alloying treatment, that is, a galvannealed steel sheet may be used. Furthermore, a zinc-based plating containing a metal other than zinc, such as a zinc-aluminum alloy plating, a zinc-aluminum-magnesium alloy plating, or a zinc-nickel alloy plating, may be applied.
Next, a method for forming the acrylic resin film will be described. The acrylic resin is dissolved or dispersed into a solvent, and the wax is added to the acrylic resin solution or emulsion. The resultant paint is applied to at least one side of the galvanized steel sheet and is dried. The solvent in the paint may be water or an organic solvent and is preferably water. The concentration of all the solids in the paint is preferably 1 mass% or more and 30 mass% or less. If the concentration of all the solids in the paint is less than 1 mass% or is more than 30 mass%, the application may produce an uneven coating. The application may be performed by any method without limitation. Examples of the application methods include the use of a roll coater or a bar coater, spraying, dipping, and brush coating. After the application, the steel sheet may be dried by a common method, for example, hot-air drying, IH heater drying, or infrared heating. The maximum temperature of the galvanized steel sheet reached during the drying is preferably 60°C or above and equal to or below the melting point of the wax that is used. If the maximum temperature reached by the galvanized steel sheet is below 60°C, the drying may take a long time and anti-rust properties may be lowered. If the maximum temperature reached by the galvanized steel sheet is above the melting point of the wax, the wax particles are melted and combine and the coarsening of particles may deteriorate the lubricity. The film is formed so that the coating weight of the film per side of the galvanized steel sheet will be 0.2 g/m² or more and 2.5 g/m² or less in terms of dry mass. The coating weight of the film may be determined by dividing the difference in weight of the galvanized steel sheet before and after the film formation by the area, or by completely removing the film from the lubricant-coated galvanized steel sheet with an organic solvent or an aqueous alkali solution having a pH of 10 or more and 13 or less, and dividing the difference in weight of the galvanized steel sheet before and after the film removal by the area.

### EXAMPLES

The present invention will be described below based on EXAMPLES. The present invention is not limited to EXAMPLES below.
Galvannealed steel sheets (GA), electrogalvanized steel sheets (EG), and a hot-dip galvanized steel sheet (GI) were provided that were each 0.8 mm in thickness and had an arithmetic average roughness Ra described in Table 1. Paints that had a composition shown in Table 2 were applied with a bar coater and were dried with an IH heater so that the maximum temperature reached by the steel sheet would be 80°C. Galvanized steel sheets of the present invention were thus produced as test materials. The galvanized steel sheets A to G are galvanized SPCD (JIS G 3141) with 270 MPa grade tensile strength. Colloidal silica having a volume average particle size of 9 nm was used as silica. In the paints that were used, the concentration of all the solids was 3% to 25%.

The coating weight of the film was determined by removing the film from the lubricant-coated galvanized steel sheet with an aqueous sodium hydroxide solution having a pH of 12, and dividing the difference in mass of the galvanized steel sheet before and after the film removal by the area.

**[Table 1]**

| Steel sheets | Type of galvanization | Zinc metal coating weight (g/m²) | Ra (µm) |
|---|---|---|---|
| A | GA | 40 | 0.58 |
| B | GA | 40 | 0.81 |
| C | GA | 40 | 1.35 |
| D | GA | 40 | 2.41 |
| E | EG | 5 | 0.78 |
| F | EG | 20 | 0.78 |
| G | GI | 60 | 0.78 |

**[Table 2]**

| No. | Acrylic resins | | | | | | Waxes | | | | Anti-rust agents | | Silica | Remarks |
|---|---|---|---|---|---|---|---|---|---|---|---|---|---|---|
| | Type | Tg (°C) | Acid value (mg-KOH/g) | R (= Acid value/Tg) | Molecular weight | Mass fraction (%) | Type | Melting point (°C) | Average particle size (µm) | Mass fraction (%) | Type | Mass fraction (%) | Mass fraction (%) | |
| 1 | Styrene acrylic | 80 | 185 | 2.31 | 10000 | 80 | Polyethylene | 130 | 0.15 | 20 | - | 0 | 0 | COMP. EX. |
| 2 | Styrene acrylic | 100 | 200 | 2.00 | 10000 | 80 | Polyethylene | 130 | 0.15 | 20 | - | 0 | 0 | INV. EX. |
| 3 | Styrene acrylic | 120 | 240 | 2.00 | 10000 | 80 | Polyethylene | 130 | 0.15 | 20 | - | 0 | 0 | INV. EX. |
| 4 | Styrene acrylic | 130 | 350 | 2.69 | 10000 | 80 | Polyethylene | 130 | 0.15 | 20 | - | 0 | 0 | INV. EX. |
| 5 | Styrene acrylic | 130 | 400 | 3.08 | 10000 | 80 | Polyethylene | 130 | 0.15 | 20 | - | 0 | 0 | INV. EX. |
| 6 | Styrene acrylic | 101 | 160 | 1.58 | 10000 | 80 | Polyethylene | 130 | 0.15 | 20 | - | 0 | 0 | INV. EX. |
| 7 | Styrene acrylic | 120 | 180 | 1.50 | 10000 | 80 | Polyethylene | 130 | 0.15 | 20 | - | 0 | 0 | INV. EX. |
| 8 | Styrene acrylic | 130 | 220 | 1.69 | 4000 | 80 | Polyethylene | 130 | 0.15 | 20 | - | 0 | 0 | INV. EX. |
| 9 | Styrene acrylic | 128 | 260 | 2.03 | 5000 | 80 | Polyethylene | 130 | 0.15 | 20 | - | 0 | 0 | INV. EX. |
| 10 | Styrene acrylic | 110 | 200 | 1.82 | 30000 | 80 | Polyethylene | 130 | 0.15 | 20 | - | 0 | 0 | INV. EX. |
| 11 | Styrene acrylic | 110 | 200 | 1.82 | 50000 | 80 | Polyethylene | 130 | 0.15 | 20 | - | 0 | 0 | INV. EX. |
| 12 | Styrene acrylic | 140 | 180 | 1.29 | 10000 | 80 | Polyethylene | 130 | 0.15 | 20 | - | 0 | 0 | COMP. EX. |
| 13 | Styrene acrylic | 110 | 115 | 1.05 | 10000 | 80 | Polyethylene | 130 | 0.15 | 20 | - | 0 | 0 | COMP. EX. |
| 14 | Styrene acrylic | 120 | 240 | 2.00 | 10000 | 80 | Polyethylene | 90 | 0.2 | 20 | - | 0 | 0 | COMP. EX. |
| 15 | Styrene acrylic | 120 | 240 | 2.00 | 10000 | 80 | Polyethylene | 100 | 0.3 | 20 | - | 0 | 0 | INV. EX. |
| 16 | Styrene acrylic | 120 | 240 | 2.00 | 10000 | 80 | Polyethylene | 120 | 0.06 | 20 | - | 0 | 0 | INV. EX. |
| 17 | Styrene acrylic | 120 | 240 | 2.00 | 10000 | 80 | Polypropylene | 145 | 0.03 | 20 | - | 0 | 0 | INV. EX. |
| 18 | Styrene acrylic | 120 | 240 | 2.00 | 10000 | 80 | Polypropylene | 155 | 0.06 | 20 | - | 0 | 0 | COMP. EX. |
| 19 | Styrene acrylic | 120 | 240 | 2.00 | 10000 | 80 | Polyethylene | 132 | 0.5 | 20 | - | 0 | 0 | INV. EX. |
| 20 | Styrene acrylic | 120 | 240 | 2.00 | 10000 | 80 | Polyethylene | 132 | 3 | 20 | - | 0 | 0 | INV. EX. |
| 21 | Styrene acrylic | 120 | 240 | 2.00 | 10000 | 80 | Polyethylene | 132 | 6 | 20 | - | 0 | 0 | COMP. EX. |
| 22 | Styrene acrylic | 120 | 240 | 2.00 | 10000 | 100 | - | - | - | 0 | - | 0 | 0 | COMP. EX. |
| 23 | Styrene acrylic | 120 | 240 | 2.00 | 10000 | 95 | Polyethylene | 120 | 0.06 | 5 | - | 0 | 0 | INV. EX. |
| 24 | Styrene acrylic | 120 | 240 | 2.00 | 10000 | 90 | Polyethylene | 120 | 0.06 | 10 | - | 0 | 0 | INV. EX. |
| 25 | Styrene acrylic | 120 | 240 | 2.00 | 10000 | 50 | Polyethylene | 120 | 0.06 | 50 | - | 0 | 0 | INV. EX. |
| 26 | Styrene acrylic | 120 | 240 | 2.00 | 10000 | 40 | Polyethylene | 120 | 0.06 | 60 | - | 0 | 0 | INV. EX. |
| 27 | Acrylic | 110 | 190 | 1.73 | 10000 | 80 | Polyethylene | 130 | 0.15 | 20 | - | 0 | 0 | INV. EX. |
| 28 | Styrene acrylic | 120 | 240 | 2.00 | 10000 | 79 | Polyethylene | 130 | 0.15 | 20 | Aluminum tripolyphosphate | 1 | 0 | INV. EX. |
| 29 | Styrene acrylic | 120 | 240 | 2.00 | 10000 | 65 | Polyethylene | 130 | 0.15 | 20 | Aluminum tripolyphosphate | 15 | 0 | INV. EX. |
| 30 | Styrene acrylic | 120 | 240 | 2.00 | 10000 | 50 | Polyethylene | 130 | 0.15 | 20 | Aluminum tripolyphosphate | 30 | 0 | INV. EX. |
| 31 | Styrene acrylic | 120 | 240 | 2.00 | 10000 | 40 | Polyethylene | 130 | 0.15 | 20 | Aluminum tripolyphosphate | 40 | 0 | INV. EX. |
| 32 | Styrene acrylic | 120 | 240 | 2.00 | 10000 | 65 | Polyethylene | 130 | 0.15 | 20 | Zinc phosphate | 15 | 0 | INV. EX. |
| 33 | Styrene acrylic | 120 | 240 | 2.00 | 10000 | 65 | Polyethylene | 130 | 0.15 | 20 | Zinc oxide | 15 | 0 | INV. EX. |
| 34 | Styrene acrylic | 120 | 240 | 2.00 | 10000 | 64 | Polyethylene | 130 | 0.15 | 20 | Aluminum tripolyphosphate | 15 | 1 | INV. EX. |
| 35 | Styrene acrylic | 120 | 240 | 2.00 | 10000 | 60 | Polyethylene | 130 | 0.15 | 20 | Aluminum tripolyphosphate | 15 | 5 | INV. EX. |
| 36 | Styrene acrylic | 120 | 240 | 2.00 | 10000 | 55 | Polyethylene | 130 | 0.15 | 20 | Aluminum tripolyphosphate | 15 | 10 | INV. EX. |
| 37 | Styrene acrylic | 120 | 240 | 2.00 | 10000 | 50 | Polyethylene | 130 | 0.15 | 20 | Aluminum tripolyphosphate | 15 | 15 | INV. EX. |

### (1) Method for evaluating press formability (sliding properties)

To evaluate the press formability, the coefficient of friction of the test materials was measured as follows.

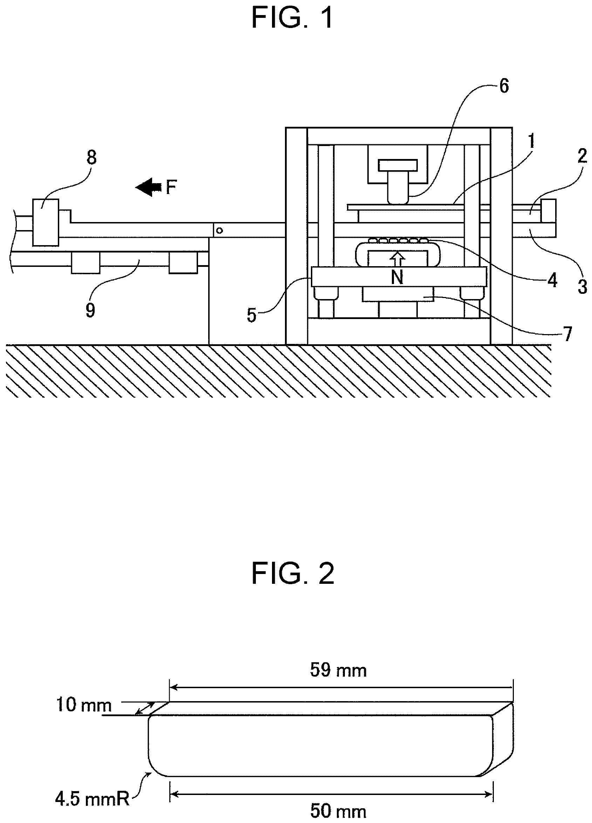

Fig. 1 is a schematic front view illustrating a friction coefficient measuring device. As illustrated in the figure, a friction coefficient measurement sample 1 taken from the test material is fixed on a sample stage 2, and the sample stage 2 is fixed on the upper face of a horizontally movable slide table 3. A vertically movable slide table support 5 is provided that has rollers 4 in contact with the lower face of the slide table 3. A first load cell 7 is attached to the slide table support 5 to serve as a pusher for the slide table support to measure the pressing load N of a bead 6 to the friction coefficient measurement sample 1. A second load cell 8 is attached to one end of the slide table 3 and is used to measure the sliding resistance force F required to move the slide table 3 in the horizontal direction under the application of the pressing force. The test was conducted after press cleaning oil PRETON (registered trademark) R352L manufactured by SUGIMURA Chemical Industrial Co., Ltd. was applied as a lubricating oil to the surface of the sample 1.

Fig. 2 is a schematic perspective view illustrating the shape and the dimensions of the bead used. The sample 1 is slid while the lower face of the bead 6 is pressed against the surface of the sample. The bead 6 illustrated in Fig. 2 is 10 mm in width and 59 mm in length in the sample sliding direction, and the lower portions at both ends in the sliding direction are curved with a curvature of 4.5 mm R. The lower face of the bead that pushes the sample is a flat face having a width of 10 mm and a length in the sliding direction of 50 mm.

The friction coefficient measurement test was performed using the bead illustrated in Fig. 2 with a pressing load N of 400 kgf and a sample withdrawal speed (a horizontal speed of the slide table 3) of 20 cm/min. The coefficient µ of friction between the test material and the bead was calculated by the formula: µ = F/N.

For the evaluation of sliding properties, the slidability was rated as excellent (⊚) when the coefficient of friction was 0.119 or less, as good (∘) when the coefficient of friction was more than 0.119 and 0.130 or less, and as insufficient (×) when the coefficient of friction was more than 0.130.

### (2) Method for evaluating weldability

The test specimens were each welded to test the electrode tip life under conditions where electrodes used: DR type Cr-Cu electrodes, welding force: 150 kgf, current application time: 10 cycles/60 Hz, and welding current: 7.5 kA. The weldability was evaluated based on the number of consecutive welding points. The weldability was rated as good (∘) when the number of consecutive welding points was 90% or more compared to the galvanized steel sheet without the acrylic film, and was rated as insufficient (×) when the number of consecutive welding points was less than 90%.

### (3) Method for evaluating film removability

Assuming that the steel sheets according to the present invention would be used in automobile applications, the film removability during degreasing was evaluated. To determine the removability of the film, first, each test specimen was degreased with alkaline degreasing agent Fine Cleaner (registered trademark) E6403 (manufactured by Nihon Parkerizing Co., Ltd.). In the degreasing treatment, the test specimen was immersed in a degreasing liquid having a degreasing agent concentration of 20 g/L and a temperature of 40°C for a predetermined amount of time, and was washed with tap water. The test specimen after the degreasing treatment was analyzed with a fluorescent X-ray analyzer to measure the surface carbon intensity. The removed film ratio was calculated from the formula below using the measured value and the values measured beforehand of the surface carbon intensity before the degreasing and the surface carbon intensity of the unlubricated metal sheet. Removed film ratio (%) = [(carbon intensity before degreasing - carbon intensity after degreasing)/(carbon intensity before degreasing - carbon intensity of unlubricated steel sheet)] × 100

The removability of the film was evaluated based on the immersion time in the alkaline degreasing liquid required until the removed film ratio reached 98% or more, and was rated as good (∘) when the immersion time was within 120 seconds and as insufficient (Δ) when the immersion time was more than 120 seconds.

### (4) Method for evaluating anti-rust properties

Assuming that the galvanized steel sheets according to the present invention were steel strips and would be stored in the form of coils, anti-rust properties in a stacked state were evaluated. The test material was processed to give two 150 mm × 70 mm test specimens, and an anti-rust oil was applied to both sides of each test specimen in an amount of 1.0 g/m² per side. The test specimens were stacked one on top of the other and were subjected to a load so that the contact pressure would be 0.02 kgf/mm². The test was then conducted in an environment at a temperature of 50°C and a humidity of 95% RH. To evaluate anti-rust properties, the inner sides of the stacked test specimens were examined every seven days until any discoloration occurred. The anti-rust properties were rated as excellent (⊚) when the number of days was 56 or more, as good (∘) when the number of days was 35 or more, and as insufficient (Δ) when the number of days was less than 35.

### (5) Method for evaluating adhesion property

The test material was processed to give two 100 × 25.4 mm test specimens, which were then immersed in an anti-rust oil and were stood vertically for 24 hours to remove the extra oil. An epoxy adhesive was applied uniformly with a thickness of 0.2 mm to a 25.4 mm × 13 mm region. The test specimens were stacked and fastened with clips. Baking was performed at 180°C for 20 minutes to dry and cure the adhesive. After being cooled, the stack was subjected to a shear tensile test using an autograph tester to measure the shear adhesive strength. The adhesion property was rated as good (∘) when the adhesive strength was 20 MPa or more and as insufficient (Δ) when the adhesive strength was less than 20 MPa.

**[Table 3-1]**

| No. | Steel sheet | Paint No. | Coating weight (g/m²) | Slidability | | Weldability | Film removability | | Anti-rust properties | | Adhesion property | | Remarks |
|---|---|---|---|---|---|---|---|---|---|---|---|---|---|
| | | | | Coefficient of friction | Rating | Rating | Film removal time (sec) | Rating | Days until discoloration | Rating | Strength (MPa) | Rating | |
| 1 | B | 1 | 1.0 | 0.197 | × | ○ | 90 | ○ | 42 | ○ | 5.9 | Δ | COMP. EX. |
| 2 | B | 2 | 1.0 | 0.103 | ⊚ | ○ | 30 | ○ | 42 | ○ | 25.3 | ○ | INV. EX. |
| 3 | B | 3 | 1.0 | 0.097 | ⊚ | ○ | 30 | ○ | 42 | ○ | 24.9 | ○ | INV. EX. |
| 4 | B | 3 | 0.1 | 0.192 | × | ○ | 10 | ○ | 49 | ○ | 25.6 | ○ | COMP. EX. |
| 5 | B | 3 | 0.2 | 0.123 | ○ | ○ | 10 | ○ | 49 | ○ | 24.9 | ○ | INV. EX. |
| 6 | B | 3 | 2.0 | 0.088 | ⊚ | ○ | 60 | ○ | 42 | ○ | 22.6 | ○ | INV. EX. |
| 7 | B | 3 | 2.5 | 0.090 | ⊚ | ○ | 120 | ○ | 42 | ○ | 20.9 | ○ | INV. EX. |
| 8 | B | 3 | 3.0 | 0.093 | ⊚ | × | 150 | Δ | 42 | ○ | 18.0 | Δ | COMP. EX. |
| 9 | B | 4 | 1.0 | 0.091 | ⊚ | ○ | 10 | ○ | 35 | ○ | 25.7 | ○ | INV. EX. |
| 10 | B | 5 | 1.0 | 0.087 | ⊚ | ○ | 10 | ○ | 21 | Δ | 24.4 | ○ | INV. EX. |
| 11 | B | 6 | 1.0 | 0.121 | ○ | ○ | 180 | Δ | 42 | ○ | 16.5 | Δ | INV. EX. |
| 12 | B | 7 | 1.0 | 0.122 | ○ | ○ | 120 | ○ | 42 | ○ | 25.4 | ○ | INV. EX. |
| 13 | B | 8 | 1.0 | 0.120 | ○ | ○ | 30 | ○ | 28 | Δ | 25.3 | ○ | INV. EX. |
| 14 | B | 9 | 1.0 | 0.099 | ⊚ | ○ | 30 | ○ | 42 | ○ | 25.2 | ○ | INV. EX. |
| 15 | B | 10 | 1.0 | 0.105 | ⊚ | ○ | 30 | ○ | 42 | ○ | 20.9 | ○ | INV. EX. |
| 16 | B | 11 | 1.0 | 0.103 | ⊚ | ○ | 30 | ○ | 42 | ○ | 17.0 | Δ | INV. EX. |
| 17 | B | 12 | 1.0 | 0.134 | × | ○ | 120 | ○ | 42 | ○ | 24.9 | ○ | COMP. EX. |
| 18 | B | 13 | 1.0 | 0.131 | × | ○ | 180 | Δ | 42 | ○ | 22.2 | ○ | COMP. EX. |
| 19 | B | 14 | 1.0 | 0.141 | × | ○ | 30 | ○ | 42 | ○ | 24.9 | ○ | COMP. EX. |
| 20 | B | 15 | 1.0 | 0.120 | ○ | ○ | 30 | ○ | 42 | ○ | 25.2 | ○ | INV. EX. |
| 21 | B | 16 | 1.0 | 0.110 | ⊚ | ○ | 30 | ○ | 42 | ○ | 25.1 | ○ | INV. EX. |
| 22 | B | 17 | 1.0 | 0.121 | ○ | ○ | 30 | ○ | 42 | ○ | 25.3 | ○ | INV. EX. |
| 23 | B | 18 | 1.0 | 0.198 | × | ○ | 30 | ○ | 42 | ○ | 25.0 | ○ | COMP. EX. |
| 24 | B | 19 | 1.0 | 0.113 | ⊚ | ○ | 30 | ○ | 42 | ○ | 24.9 | ○ | INV. EX. |
| 25 | B | 20 | 1.0 | 0.124 | ○ | ○ | 30 | ○ | 42 | ○ | 22.8 | ○ | INV. EX. |
| 26 | B | 21 | 1.0 | 0.162 | × | ○ | 30 | ○ | 42 | ○ | 21.2 | ○ | COMP. EX. |
| 27 | B | 22 | 1.0 | 0.239 | × | ○ | 30 | ○ | 42 | ○ | 24.7 | ○ | COMP. EX. |
| 28 | B | 23 | 1.0 | 0.126 | ○ | ○ | 30 | ○ | 42 | ○ | 24.3 | ○ | INV. EX. |
| 29 | B | 24 | 1.0 | 0.111 | ⊚ | ○ | 30 | ○ | 42 | ○ | 25.6 | ○ | INV. EX. |
| 30 | B | 25 | 1.0 | 0.093 | ⊚ | ○ | 120 | ○ | 42 | ○ | 21.3 | ○ | INV. EX. |
| 31 | B | 26 | 1.0 | 0.094 | ⊚ | ○ | 180 | Δ | 42 | ○ | 13.0 | Δ | INV. EX. |
| 32 | B | 27 | 1.0 | 0.121 | ○ | ○ | 30 | ○ | 21 | Δ | 24.8 | ○ | INV. EX. |
| 33 | B | 28 | 1.0 | 0.102 | ⊚ | ○ | 30 | ○ | 49 | ○ | 25.1 | ○ | INV. EX. |
| 34 | B | 29 | 1.0 | 0.106 | ⊚ | ○ | 30 | ○ | At least 56 | ⊚ | 25.0 | ○ | INV. EX. |
| 35 | B | 30 | 1.0 | 0.109 | ⊚ | ○ | 30 | ○ | At least 56 | ⊚ | 24.2 | ○ | INV. EX. |
| 36 | B | 31 | 1.0 | 0.110 | ○ | ○ | 30 | ○ | At least 56 | ⊚ | 16.2 | Δ | INV. EX. |
| 37 | B | 32 | 1.0 | 0.100 | ⊚ | ○ | 30 | ○ | At least 56 | ⊚ | 25.5 | ○ | INV. EX. |
| 38 | B | 33 | 1.0 | 0.097 | ⊚ | ○ | 30 | ○ | At least 56 | ⊚ | 24.6 | ○ | INV. EX. |
| 39 | B | 34 | 1.0 | 0.095 | ⊚ | ○ | 30 | ○ | At least 56 | ⊚ | 25.6 | ○ | INV. EX. |
| 40 | B | 35 | 1.0 | 0.099 | ⊚ | ○ | 30 | ○ | At least 56 | ⊚ | 25.1 | ○ | INV. EX. |
| 41 | B | 36 | 1.0 | 0.099 | ⊚ | ○ | 60 | ○ | At least 56 | ⊚ | 22.0 | ○ | INV. EX. |
| 42 | B | 37 | 1.0 | 0.101 | ⊚ | ○ | 90 | ○ | At least 56 | ⊚ | 12.3 | Δ | INV. EX. |
| 43 | B | No film | 0.0 | 0.215 | × | ○ | 0 | ○ | At least 56 | ⊚ | 25.0 | ○ | COMP. EX. |

**[Table 3-2]**

| No. | Steel sheet | Paint No. | Coating weight (g/m²) | Slidability | | Weldability | Film removability | | Anti-rust properties | | Adhesion property | | Remarks |
|---|---|---|---|---|---|---|---|---|---|---|---|---|---|
| | | | | Coefficient of friction | Rating | Rating | Film removal time (sec) | Rating | Days until discoloration | Rating | Strength (MPa) | Rating | |
| 44 | G | 1 | 1.0 | 0.205 | × | ○ | 90 | ○ | 42 | ○ | 7.0 | Δ | COMP. EX. |
| 45 | G | 2 | 1.0 | 0.091 | ⊚ | ○ | 30 | ○ | 42 | ○ | 23.4 | ○ | INV. EX. |
| 46 | G | 3 | 1.0 | 0.088 | ⊚ | ○ | 30 | ○ | 42 | ○ | 29.8 | ○ | INV. EX. |
| 47 | G | 3 | 0.1 | 0.142 | × | ○ | 10 | ○ | 49 | ○ | 29.9 | ○ | COMP. EX. |
| 48 | G | 3 | 0.2 | 0.120 | ○ | ○ | 10 | ○ | 49 | ○ | 30.0 | ○ | INV. EX. |
| 49 | G | 3 | 2.0 | 0.080 | ⊚ | ○ | 60 | ○ | 42 | ○ | 25.1 | ○ | INV. EX. |
| 50 | G | 3 | 2.5 | 0.082 | ⊚ | ○ | 120 | ○ | 42 | ○ | 22.0 | ○ | INV. EX. |
| 51 | G | 3 | 3.0 | 0.086 | ⊚ | × | 150 | Δ | 42 | ○ | 19.0 | Δ | COMP. EX. |
| 52 | G | 4 | 1.0 | 0.084 | ⊚ | ○ | 10 | ○ | 35 | ○ | 30.5 | ○ | INV. EX. |
| 53 | G | 5 | 1.0 | 0.080 | ⊚ | ○ | 10 | ○ | 21 | Δ | 29.6 | ○ | INV. EX. |
| 54 | G | 6 | 1.0 | 0.120 | ○ | ○ | 180 | Δ | 42 | ○ | 18.5 | Δ | INV. EX. |
| 55 | G | 7 | 1.0 | 0.121 | ○ | ○ | 120 | ○ | 42 | ○ | 29.6 | ○ | INV. EX. |
| 56 | G | 8 | 1.0 | 0.120 | ○ | ○ | 30 | ○ | 28 | Δ | 30.0 | ○ | INV. EX. |
| 57 | G | 9 | 1.0 | 0.090 | ⊚ | ○ | 30 | ○ | 42 | ○ | 29.9 | ○ | INV. EX. |
| 58 | G | 10 | 1.0 | 0.094 | ⊚ | ○ | 30 | ○ | 42 | ○ | 21.4 | ○ | INV. EX. |
| 59 | G | 11 | 1.0 | 0.091 | ⊚ | ○ | 30 | ○ | 42 | ○ | 17.9 | Δ | INV. EX. |
| 60 | G | 12 | 1.0 | 0.132 | × | ○ | 120 | ○ | 42 | ○ | 27.9 | ○ | COMP. EX. |
| 61 | G | 13 | 1.0 | 0.130 | × | ○ | 180 | Δ | 42 | ○ | 24.6 | ○ | COMP. EX. |
| 62 | G | 14 | 1.0 | 0.137 | × | o | 30 | ○ | 42 | ○ | 29.0 | ○ | COMP. EX. |
| 63 | G | 15 | 1.0 | 0.120 | ○ | ○ | 30 | ○ | 42 | ○ | 28.9 | ○ | INV. EX. |
| 64 | G | 16 | 1.0 | 0.100 | ⊚ | ○ | 30 | ○ | 42 | ○ | 29.8 | ○ | INV. EX. |
| 65 | G | 17 | 1.0 | 0.120 | ○ | ○ | 30 | ○ | 42 | ○ | 30.2 | ○ | INV. EX. |
| 66 | G | 18 | 1.0 | 0.205 | × | o | 30 | ○ | 42 | ○ | 29.7 | ○ | COMP. EX. |
| 67 | G | 19 | 1.0 | 0.102 | ⊚ | ○ | 30 | ○ | 42 | ○ | 29.0 | ○ | INV. EX. |
| 68 | G | 20 | 1.0 | 0.120 | ○ | ○ | 30 | ○ | 42 | ○ | 24.5 | ○ | INV. EX. |
| 69 | G | 21 | 1.0 | 0.159 | × | ○ | 30 | ○ | 42 | ○ | 23.0 | ○ | COMP. EX. |
| 70 | G | 22 | 1.0 | 0.315 | × | ○ | 30 | ○ | 42 | ○ | 30.8 | ○ | COMP. EX. |
| 71 | G | 23 | 1.0 | 0.122 | ○ | ○ | 30 | ○ | 42 | ○ | 28.9 | ○ | INV. EX. |
| 72 | G | 24 | 1.0 | 0.102 | ⊚ | ○ | 30 | ○ | 42 | ○ | 30.5 | ○ | INV. EX. |
| 73 | G | 25 | 1.0 | 0.080 | ⊚ | ○ | 120 | ○ | 42 | ○ | 23.4 | ○ | INV. EX. |
| 74 | G | 26 | 1.0 | 0.083 | ⊚ | ○ | 180 | Δ | 42 | ○ | 13.5 | Δ | INV. EX. |
| 75 | G | 27 | 1.0 | 0.120 | ○ | ○ | 30 | ○ | 21 | Δ | 30.5 | ○ | INV. EX. |
| 76 | G | 28 | 1.0 | 0.091 | ⊚ | ○ | 30 | ○ | 49 | ○ | 30.0 | ○ | INV. EX. |
| 77 | G | 29 | 1.0 | 0.092 | ⊚ | ○ | 30 | ○ | At least 56 | ⊚ | 29.5 | ○ | INV. EX. |
| 78 | G | 30 | 1.0 | 0.095 | ⊚ | ○ | 30 | ○ | At least 56 | ⊚ | 25.7 | ○ | INV. EX. |
| 79 | G | 31 | 1.0 | 0.093 | ○ | ○ | 30 | ○ | At least 56 | ⊚ | 17.2 | Δ | INV. EX. |
| 80 | G | 32 | 1.0 | 0.087 | ⊚ | ○ | 30 | ○ | At least 56 | ⊚ | 29.3 | ○ | INV. EX. |
| 81 | G | 33 | 1.0 | 0.088 | ⊚ | ○ | 30 | ○ | At least 56 | ⊚ | 30.2 | ○ | INV. EX. |
| 82 | G | 34 | 1.0 | 0.084 | ⊚ | ○ | 30 | ○ | At least 56 | ⊚ | 30.5 | ○ | INV. EX. |
| 83 | G | 35 | 1.0 | 0.090 | ⊚ | ○ | 30 | ○ | At least 56 | ⊚ | 28.0 | ○ | INV. EX. |
| 84 | G | 36 | 1.0 | 0.088 | ⊚ | ○ | 60 | ○ | At least 56 | ⊚ | 23.4 | ○ | INV. EX. |
| 85 | G | 37 | 1.0 | 0.089 | ⊚ | ○ | 90 | ○ | At least 56 | ⊚ | 13.6 | Δ | INV. EX. |
| 86 | G | No film | 0.0 | 0.302 | × | ○ | 0 | ○ | At least 56 | ⊚ | 30.1 | ○ | COMP. EX. |

**[Table 3-3]**

| No. | Steel sheet | Paint No. | Coating weight (g/m²) | Slidability | | Weldability | Film removability | | Anti-rust properties | | Adhesion property | | Remarks |
|---|---|---|---|---|---|---|---|---|---|---|---|---|---|
| | | | | Coefficient of friction | Rating | Rating | Film removal time (sec) | Rating | Days until discoloration | Rating | Strength (MPa) | Rating | |
| 87 | A | 3 | 1.0 | 0.089 | ⊚ | ○ | 30 | ○ | 42 | ○ | 24.5 | ○ | INV. EX. |
| 88 | A | 3 | 0.1 | 0.142 | × | ○ | 10 | ○ | 49 | ○ | 24.6 | ○ | COMP. EX. |
| 89 | A | 3 | 0.2 | 0.122 | ○ | ○ | 10 | ○ | 49 | ○ | 24.0 | ○ | INV. EX. |
| 90 | A | 3 | 2.0 | 0.092 | ⊚ | ○ | 60 | ○ | 42 | ○ | 21.9 | ○ | INV. EX. |
| 91 | A | 3 | 2.5 | 0.095 | ⊚ | ○ | 120 | ○ | 42 | ○ | 20.8 | ○ | INV. EX. |
| 92 | A | 3 | 3.0 | 0.094 | ⊚ | × | 150 | Δ | 42 | ○ | 16.2 | Δ | COMP. EX. |
| 93 | A | No film | 0.0 | 0.231 | × | ○ | 0 | ○ | At least 56 | ⊚ | 24.6 | ○ | COMP. EX. |
| 94 | C | 3 | 1.0 | 0.102 | ⊚ | ○ | 30 | ○ | 42 | ○ | 25.7 | ○ | INV. EX. |
| 95 | C | 3 | 0.1 | 0.159 | × | ○ | 10 | ○ | 49 | ○ | 25.6 | ○ | COMP. EX. |
| 96 | C | 3 | 0.2 | 0.124 | ○ | ○ | 10 | ○ | 49 | ○ | 25.8 | ○ | INV. EX. |
| 97 | C | 3 | 2.0 | 0.100 | ⊚ | ○ | 60 | ○ | 42 | ○ | 23.4 | ○ | INV. EX. |
| 98 | C | 3 | 2.5 | 0.103 | ⊚ | ○ | 120 | ○ | 42 | ○ | 21.4 | ○ | INV. EX. |
| 99 | C | 3 | 3.0 | 0.102 | ⊚ | × | 150 | Δ | 42 | ○ | 18.2 | Δ | COMP. EX. |
| 100 | C | No film | 0.0 | 0.202 | × | ○ | 0 | ○ | At least 56 | ⊚ | 25.9 | ○ | COMP. EX. |
| 94 | D | 3 | 1.0 | 0.105 | ⊚ | ○ | 30 | ○ | 42 | ○ | 26.1 | ○ | INV. EX. |
| 95 | D | 3 | 0.1 | 0.172 | × | ○ | 10 | ○ | 49 | ○ | 25.8 | ○ | COMP. EX. |
| 96 | D | 3 | 0.2 | 0.129 | ○ | ○ | 10 | ○ | 49 | ○ | 26.0 | ○ | INV. EX. |
| 97 | D | 3 | 2.0 | 0.099 | ⊚ | ○ | 60 | ○ | 42 | ○ | 22.4 | ○ | INV. EX. |
| 98 | D | 3 | 2.5 | 0.103 | ⊚ | ○ | 120 | ○ | 42 | ○ | 21.0 | ○ | INV. EX. |
| 99 | D | 3 | 3.0 | 0.100 | ⊚ | × | 150 | Δ | 42 | ○ | 18.0 | Δ | COMP. EX. |
| 100 | D | No film | 0.0 | 0.210 | × | ○ | 0 | ○ | At least 56 | ⊚ | 26.0 | ○ | COMP. EX. |
| 101 | E | 3 | 1.0 | 0.090 | ⊚ | ○ | 30 | ○ | 42 | ○ | 28.9 | ○ | INV. EX. |
| 102 | E | 3 | 0.1 | 0.139 | × | ○ | 10 | ○ | 49 | ○ | 29.8 | ○ | COMP. EX. |
| 103 | E | 3 | 0.2 | 0.125 | ○ | ○ | 10 | ○ | 49 | ○ | 29.5 | ○ | INV. EX. |
| 104 | E | 3 | 2.0 | 0.090 | ⊚ | ○ | 60 | ○ | 42 | ○ | 23.5 | ○ | INV. EX. |
| 105 | E | 3 | 2.5 | 0.095 | ⊚ | ○ | 120 | ○ | 42 | ○ | 21.5 | ○ | INV. EX. |
| 106 | E | 3 | 3.0 | 0.098 | ⊚ | × | 150 | Δ | 42 | ○ | 17.2 | Δ | COMP. EX. |
| 107 | E | No film | 0.0 | 0.322 | × | ○ | 0 | ○ | At least 56 | ⊚ | 29.9 | ○ | COMP. EX. |
| 108 | F | 3 | 1.0 | 0.081 | ⊚ | ○ | 30 | ○ | 42 | ○ | 30.3 | ○ | INV. EX. |
| 109 | F | 3 | 0.1 | 0.134 | × | ○ | 10 | ○ | 49 | ○ | 30.1 | ○ | COMP. EX. |
| 110 | F | 3 | 0.2 | 0.123 | ○ | ○ | 10 | ○ | 49 | ○ | 30.2 | ○ | INV. EX. |
| 111 | F | 3 | 2.0 | 0.080 | ⊚ | ○ | 60 | ○ | 42 | ○ | 24.0 | ○ | INV. EX. |
| 112 | F | 3 | 2.5 | 0.084 | ⊚ | ○ | 120 | ○ | 42 | ○ | 21.2 | ○ | INV. EX. |
| 113 | F | 3 | 3.0 | 0.085 | ⊚ | × | 150 | Δ | 42 | ○ | 18.0 | Δ | COMP. EX. |
| 114 | F | No film | 0.0 | 0.315 | × | ○ | 0 | ○ | At least 56 | ⊚ | 30.8 | ○ | COMP. EX. |

According to Tables 3-1 to **3-3,** all the galvanized steel sheets of INVENTIVE EXAMPLES have excellent press formability and weldability. In contrast, all the galvanized steel sheets of COMPARATIVE EXAMPLES that did not have the technical features of the present invention are poor in press formability. Furthermore, the galvanized steel sheets of INVENTIVE EXAMPLES can achieve good film removability, anti-rust properties, and adhesion property through the selection of a favorable technical range.

### Industrial Applicability

The galvanized steel sheet of the present invention excels in slidability during press forming and in weldability. Furthermore, good film removability, anti-rust properties, and adhesion property can be realized through the selection of a favorable technical range. These advantageous characteristics allow the galvanized steel sheet to find use in a broad range of fields mainly based on automobile bodies.

### Reference Signs List

- 1: FRICTION COEFFICIENT MEASUREMENT SAMPLE
- 2: SAMPLE STAGE
- 3: SLIDE TABLE
- 4: ROLLER
- 5: SLIDE TABLE SUPPORT
- 6: BEAD
- 7: FIRST LOAD CELL
- 8: SECOND LOAD CELL
- 9: RAIL

## Claims

1. A galvanized steel sheet comprising, on at least one side, a film comprising an acrylic resin and a wax, wherein the acrylic resin has a glass transition point (Tg) of 100°C or above and an acid value to glass transition point ratio R = acid value (mg-KOH/g)/Tg (°C) of 1.50 or more, the wax is a polyolefin wax having a melting point of 100°C or above and 145°C or below and an average particle size of 3.0 µm or less, the fraction of the wax in the film is 5 mass% or more, and the coating weight W of the film per side is 0.2 g/m² or more and 2.5 g/m² or less.

2. The galvanized steel sheet according to claim 1,
wherein the acid value of the acrylic resin is 180 mg-KOH/g or more and 350 mg-KOH/g or less.

3. The galvanized steel sheet according to claim 1 or 2, wherein the acid value to glass transition point ratio R of the acrylic resin is 2.05 or less.

4. The galvanized steel sheet according to any one of claims 1 to 3, wherein the film contains 30 mass% or more of the acrylic resin and the fraction of the wax is 50 mass% or less.

5. The galvanized steel sheet according to any one of claims 1 to 4, wherein the acrylic resin has a mass average molecular weight of 5000 or more and 30000 or less.

6. The galvanized steel sheet according to any one of claims 1 to 5, wherein the acrylic resin is a styrene acrylic resin.

7. The galvanized steel sheet according to any one of claims 1 to 6, wherein the galvanized steel sheet before formation of the film has an arithmetic average roughness Ra on a surface of 0.4 µm or more and 2.5 µm or less.

8. The galvanized steel sheet according to any one of claims 1 to 7, wherein the film contains 1 mass% or more and 30 mass% or less of an anti-rust agent.

9. The galvanized steel sheet according to claim 8, wherein the anti-rust agent is at least one selected from the group consisting of aluminum salts and zinc salts of phosphoric acids, and zinc oxide.

10. The galvanized steel sheet according to any one of claims 1 to 9, wherein the average particle size of the wax is 0.01 µm or more and 0.5 µm or less.

11. The galvanized steel sheet according to any one of claims 1 to 10, wherein the film contains 1 mass% or more and 10 mass% or less of silica.

12. A galvanized steel sheet production method for producing the galvanized steel sheet described in any one of claims 1 to 11, the method comprising applying a paint comprising the acrylic resin and the wax described in any one of claims 1 to 11 to at least one side of a galvanized steel sheet, and drying the paint.

13. The galvanized steel sheet production method according to claim 12, wherein the maximum temperature of the galvanized steel sheet reached during the drying is 60°C or above and is equal to or below the melting point of the wax.

14. The galvanized steel sheet production method according to claim 12 or 13, wherein the fraction of all solids in the paint is 1 mass% or more and 30 mass% or less.
